# EUROPEAN PATENT SPECIFICATION

(11) **EP 3 352 284 B1**
(45) Date of publication and mention of the grant of the patent: **04.09.2019**
(21) Application number: 17747841.9
(22) Date of filing: 06.02.2017
(51) Int. Cl.: H01M 10/058, H01M 10/052, H01M 4/75, H01M 4/13

(54) **CABLE-TYPE SECONDARY BATTERY COMBINED WITH SIGNAL WIRE**
MIT EINEM SIGNALDRAHT KOMBINIERTE KABELARTIGE SEKUNDÄRBATTERIE
BATTERIE SECONDAIRE DE TYPE À CÂBLE COMBINÉE À UN FIL DE SIGNAL

(30) Priority: 05.02.2016 KR 20160015150
(43) Date of publication of application: 25.07.2018
(73) Proprietor: LG Chem, Ltd., Seoul 07336 (KR)
(72) Inventor: UHM, In-Sung, Daejeon 34122 (KR); KIM, Je-Young, Daejeon 34122 (KR); KWON, Yo-Han, Daejeon 34122 (KR)
(74) Representative: Cabinet Plasseraud
(86) International application number: PCT/KR2017/001304
(87) International publication number: WO 2017/135798

(56) References cited:
- JP-A- H 097 629
- JP-A- 2001 110 244
- JP-A- 2001 110 445
- KR-B1- 101 465 169
- KR-B1- 101 542 097

## Description

### TECHNICAL FIELD

The present application claims priority to Korean Patent Application No. 10-2016-0015150 filed on February 5, 2016 in the Republic of Korea.

The present disclosure relates to a cable-type secondary battery combined with a signal wire, and more particularly, to a cable-type secondary battery combined with a signal wire, in which a signal wire and a cable-type secondary battery are integrated.

### BACKGROUND ART

Lithium secondary batteries have many advantages such as a high energy density, a high operating voltage, and excellent storage and lifetime characteristics, and thus are widely used in various portable electronic devices such as personal computers, camcorders, portable telephones, portable compact disc (CD) players, personal digital assistants (PDAs).

A lithium secondary battery typically includes a cylindrical or prismatic case and an electrode assembly accommodated in the case together with an electrolyte. The electrode assembly is formed by stacking a positive electrode, a separator, and a negative electrode, and has a winding structure or a stack structure in a jelly-roll form.

Recently, cable-type secondary batteries which have an easily deformable shape and are thus applicable to various fields have been introduced. A cable-type secondary battery is a cell having a very large length-to-diameter ratio, and includes a hollow anode layer, a separator surrounding the anode layer, and a cathode layer surrounding the separator.

The technology related to cable-type secondary batteries is disclosed in JP2001110244A and in Korean Patent Publication No. 2013-0040160.

Korean Patent Publication No. 2013-0040160 discloses a cable-type secondary battery including a lithium ion supply core unit including an electrolyte, an inner electrode formed to surround an outer surface of the lithium ion supply core unit and including a spiral electrode consisting of two or more wire-type collectors which have an inner electrode active material coated on an outer surface of the spiral electrode and which are spirally twisted with each other, a separation layer formed to surround an outer surface of the inner electrode and preventing a short circuit of an electrode, and an outer electrode formed to surround an outer surface of the separation layer and including an outer electrode active material layer and an outer collector, wherein the cable-type secondary battery has a cross-section of a predetermined shape and extends longitudinally.

When a signal wire having a signal transmission function is integrated with the cable-type secondary battery as described above, a cable capable of integrally performing the functions of power supply and signal transmission/reception may be realized. A related technique is disclosed in Korean Patent Publication No. 2001-110244.

Korean Patent Publication No. 2001-110244 discloses a battery cable having an integrated structure in which a flexible secondary battery pack having a long length is provided in an exterior material and a signal cable is disposed in the exterior material adjacent to the secondary battery pack.

However, regarding such a cable structure as described above, it is difficult to assemble a cable-type secondary battery and a signal cable into a single exterior material, and thus the assembling process and mass production thereof are difficult, requiring a measure to address these difficulties. In addition, due to the structure in which a signal cable is arranged outside the cable-type secondary battery at a predetermined distance, a disadvantage that the total outer diameter is increased is generated.

### DISCLOSURE

### Technical Problem

The present disclosure is designed to solve the problems of the related art, and therefore the present disclosure is directed to providing an apparatus for manufacturing a cable-type secondary battery having a structure in which signal wires are aggregated so as to simplify an assembling process.

Another object of the present disclosure is to provide an apparatus for manufacturing a cable-type secondary battery having a structure in which a signal wire is disposed inside the cable-type secondary battery so as to prevent an increase in an outer diameter of the cable.

These and other objects and advantages of the present disclosure may be understood from the following detailed description and will become more fully apparent from the exemplary embodiments of the present disclosure. Also, it will be easily understood that the objects and advantages of the present disclosure may be realized by the means shown in the appended claims and combinations thereof.

### Technical Solution

The present invention is defined by the subject-matter of the appended claims. In one aspect of the present disclosure, there is provided a cable-type secondary battery combined with a signal wire, including: a cable-type secondary battery extending in a lengthwise direction and having a hollow interior; a signal wire unit inserted into the cable-type secondary battery and extending in the lengthwise direction of the cable; and a cable sheath covering the cable-type secondary battery.

The signal wire unit is formed of an optical cable to form a double-spiral structure.

The optical cable is a tight-buffered optical cable, a loose tube-type optical cable, or a slot-type optical cable.

The cable-type secondary battery may include: a hollow anode layer; a separator surrounding the anode layer; and a cathode layer surrounding the separator.

The anode layer may be formed by spirally winding a copper wire coated with a negative electrode active material so as to extend in the lengthwise direction of the cable.

The cathode layer may be formed by spirally winding a conductor strip coated with a positive electrode active material so as to extend in the lengthwise direction of the cable.

The cable-type secondary battery may be a lithium secondary battery.

### Advantageous Effects

The cable-type secondary battery combined with a signal wire according to the present disclosure gives the following effects.

First, the assembly process of the cable-type secondary battery combined with a signal wire may be simplified. Accordingly, an automated system may be easily established to enhance productivity of the cable-type secondary battery combined with a signal wire.

Second, as a signal wire unit is integrated by using empty inner space of the cable-type secondary battery, no additional space for installing the signal wire unit is required, and the increase in the total outer diameter of the cable may be prevented.

Third, as the signal wire unit which corresponds to an optical cable is disposed in a center of the cable, the optical cable is effectively protected from signal interference or moisture.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing:
FIG. 1 is a schematic perspective view illustrating major elements of a cable-type secondary battery combined with a signal wire according to a preferred embodiment of the present disclosure;
FIG. 2 is a partial cross-sectional view of FIG. 1;
FIGS. 3 through 5 are cross-sectional views of a structure of an optical cable that may be used as a signal wire unit in FIG. 2; and
FIG. 6 is a cross-sectional view of a structure of a conductor cable that may be used as a signal wire unit in FIG. 2.

### MODE FOR DISCLOSURE

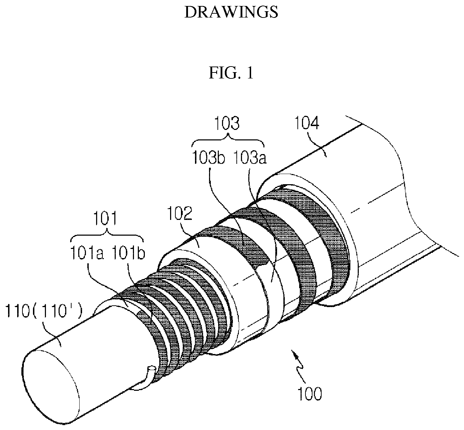

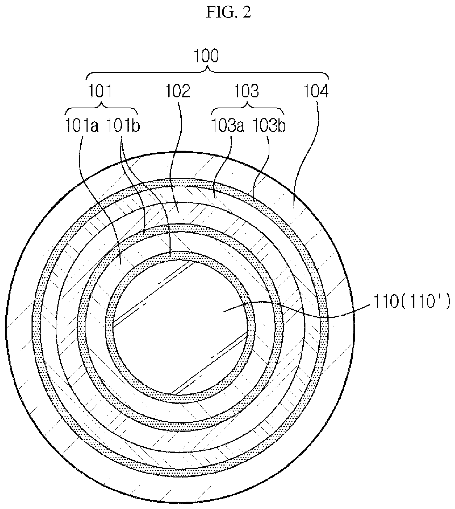

FIG. 1 is a schematic perspective view of major elements of a cable-type secondary battery combined with a signal wire according to a preferable embodiment of the present disclosure. FIG. 2 is a partial cross-sectional view of FIG. 1.

Referring to FIGS. 1 and 2, the cable-type secondary battery combined with a signal wire according to the preferable embodiment of the present disclosure includes a cable-type secondary battery 100 extending in a lengthwise direction and having a hollow interior, a signal wire unit 110 or 110' inserted into the hollow space of the cable-type secondary battery 100, and a cable sheath 104 covering the cable-type secondary battery 100.

The cable-type secondary battery 100 is a lithium secondary battery extending in a lengthwise direction and includes a hollow anode layer 101, a separator 102 surrounding the anode layer 101, and a cathode layer 103 surrounding the separator 102. The anode layer 101, the separator 102, and the cathode layer 103 are spirally wound in the lengthwise direction of the cable-type secondary battery 100. For better understanding, each layer is simplified as a circle in FIG. 2.

The anode layer 101 is formed as a copper wire 101a coated with a negative electrode active material 101b is spirally wound to extend in the lengthwise direction of the cable. As the negative electrode active material 101b that is coated on a surface of the copper wire 101a and functions as a collector, a typical negative electrode active material for lithium secondary batteries may be used.

The separator 102 is formed of a typical separator film for lithium secondary batteries, processed in a ribbon shape. The separator 102 is spirally wound around an outer portion of the anode layer 101 and extends in the lengthwise direction of the cable.

The cathode layer 103 is formed by winding a conductor strip 103a coated with a positive electrode active material 103b around an outer portion of the separator 102 to extend in the lengthwise direction of the cable. As the positive electrode active material 103b coated on a surface of the conductor strip 103a functioning as a collector, a typical negative electrode active material for lithium secondary batteries may be used.

The signal wire unit 110 or 110' is disposed to extend in the lengthwise direction of the cable in the anode layer 101 of the cable-type secondary battery 100. The signal wire unit 110 or 110' transmits a predetermined optical signal or electrical signal generated in a device to which the cable-type secondary battery is connected, in the cable-type secondary battery 100. For convenience of description, an internal configuration of the signal wire unit 110 or 110' is omitted in FIGS. 1 and 2.

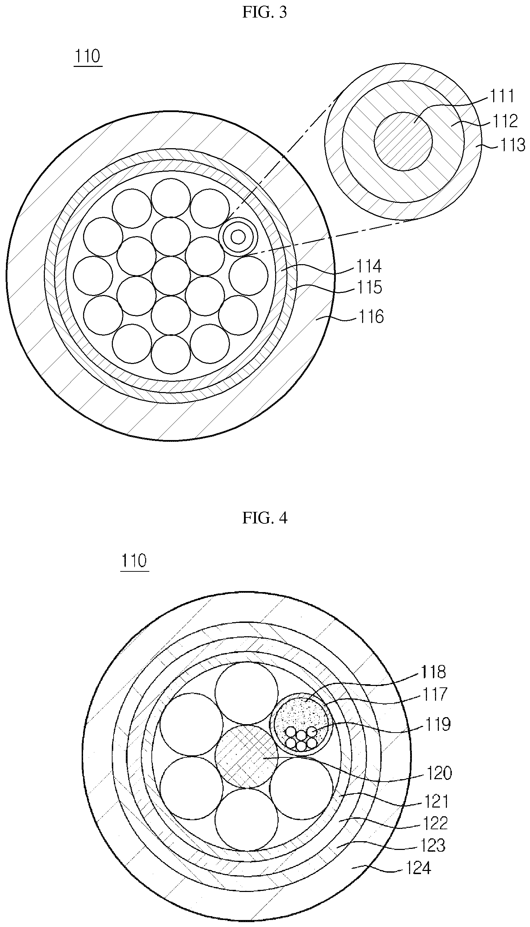

As illustrated in FIG. 3, the signal wire unit 110 is formed of a tight-buffered optical cable having a structure in which each of coated optical fibers 111 is surrounded by a water-proof tight buffer 112 and an outer coating layer 113. A double-spiral structure is formed as each of tight-buffered optical cables extend spirally in a lengthwise direction to be twisted substantially in a spring shape, and different tight-buffered optical cables are extended again spirally with respect to each other so as to be twisted in a spring shape. According to this stranded structure of the double-spiral shape, even when the signal wire unit 110 is formed of flexible optical fibers, a sufficient overall rigidity may be ensured so that the cable-type secondary battery 100 may be used as a core material in a manufacturing process in which the cable-type secondary battery 100 is assembled by winding the same on an outer portion of the signal wire unit 110. That is, by using the signal wire unit 110 in which optical fibers are twisted in a double-spiral structure, as a winding core, an operational efficiency of the process of spirally winding the anode layer 101, the separator 102, and the cathode layer 103 sequentially in a lengthwise direction of the cable-type secondary battery 100 may be maximized.

A plurality of tight-buffered optical fibers have a structure of being sequentially surrounded by an inner jacket 114, a metal exterior 115, and an outer jacket 116.

As illustrated in FIG. 4, the signal wire unit 110 is formed of a loose tube-type optical cable. In this case, the signal wire unit 110 has a structure in which loose tubes 117 accommodating coated optical fibers 119 are arranged in circles with respect to a central tension line 120, and a jelly 118 is filled in the loose tubes 117 to prevent penetration of moisture. As described above, for an efficient assembly of the cable-type secondary battery 100, the loose tube-type optical cable may preferably be stranded to form an overall double-spiral structure so as to ensure sufficient rigidity.

The plurality of loose tubes 117 are wound by a binder tape 121, and have a structure in which an inner jacket 122, a metal exterior 123, and an outer jacket 124 are sequentially arranged in an outward direction.

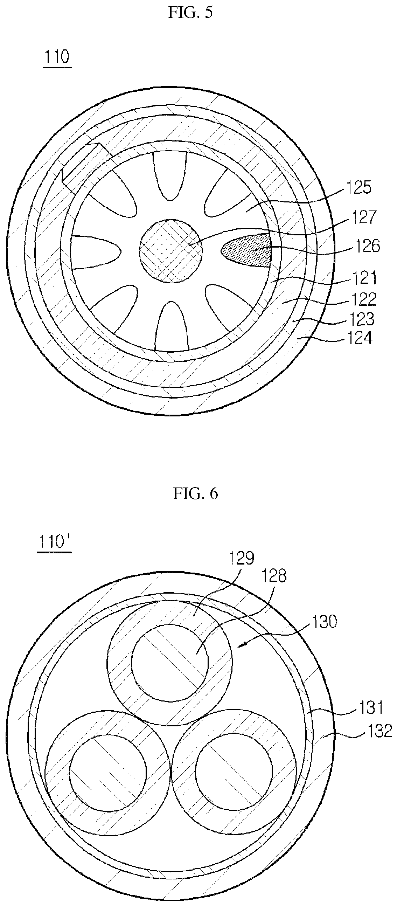

As illustrated in FIG. 5, the signal wire unit 110 is formed of a slot-type optical cable. In this case, the signal wire unit 110 includes a structure in which an optical fiber ribbon 126 formed of multi-core coated optical fiber adhered in a ribbon shape is inserted into a slot of a channel structure 125. As described above, the slot-type optical cable is disposed to form an overall double-spiral structure for efficient assembly of the cable-type secondary battery 100 so as to ensure sufficient rigidity.

A central tension line 127 is disposed in a center of the channel structure 125. In addition, the channel structure 125 is wound by the binder tape 121, and has a structure in which the inner jacket 122, the metal exterior 123, and the outer jacket 124 are sequentially arranged in an outward direction.

FIG. 6 illustrates an embodiment which does not fall under the invention as claimed in the appended claims in which a signal wire unit 110' is formed of a conductor cable. As shown in the drawing, the signal wire unit 110' includes a conducting wire 130 formed of a coated conductor 128 covered by an insulator 129. In addition, preferably, a plurality of conducting wires 130 may be included and wound by a binder tape 131, and surrounded by an outer jacket 132.

The outer jackets 116, 124, and 132 included in the signal wire units 110 or 110' may be in contact with the anode layer 101 of the cable-type secondary battery 100, and thus may preferably have a surface structure whereby damage to a negative electrode active material layer coated on the anode layer 101 may be minimized. A cable sheath 104 is provided in an outermost portion of the cable so as to provide a packaging function and protect the cable-type secondary battery 100 and the signal wire unit 110 or 110' from physical and chemical stress at the same time. The cable sheath 104 may be formed of, for example, a polyvinyl chloride (PVC) material.

The cable-type secondary battery combined with a signal wire according to the preferable embodiment of the present disclosure having the above-described structure is manufactured by preparing the cable-type secondary battery 100 by sequentially stranding an electrode wire for an anode, a separation layer ribbon, and an electrode strip for a cathode on a predetermined winding core in a spiral shape, and inserting the signal wire unit 110 or 110' into empty space formed in a center of the cable-type secondary battery 100 to extend in a lengthwise direction.

The cable-type secondary battery 100 is used to supply power to a predetermined electronic device connected to the anode layer 101 and the cathode layer 103.

The signal wire unit 110 or 110' is formed of an optical cable and transmit an optical signal or an electrical signal generated in the electronic device to a target device in the lengthwise direction of the cable-type secondary battery 100.

Accordingly, according to the present disclosure, a power supplying function and a signal transmission and reception function may be simultaneously performed using substantially a single cable.

### INDUSTRIAL APPLICABILITY

The cable-type secondary battery combined with a signal wire according to the present disclosure is usefully applicable to a power storage system such as an uninterruptible power supply (UPS), in which an optical communication network and a secondary battery are integrated, and also to cable-type devices such as earphones, which are connected to portable electronic devices.

## Claims

1. A cable-type secondary battery combined with a signal wire, comprising:
a cable-type secondary battery extending in a lengthwise direction and having a hollow interior structure;
a signal wire unit (110) inserted into the cable-type secondary battery (100) and extending in the lengthwise direction of a cable; and
a cable sheath (104) covering an outside of the cable-type secondary battery,
**characterized in that** the signal wire unit (110) is formed of an optical cable stranded to form a double-spiral structure, and
the optical cable is a tight-buffered optical cable, a loose tube-type optical cable, or a slot-type optical cable.

2. The cable-type secondary battery combined with a signal wire of claim 1, wherein the cable-type secondary battery comprises:
a hollow anode layer;
a separator surrounding the anode layer; and
a cathode layer surrounding the separator.

3. The cable-type secondary battery combined with a signal wire of claim 2, wherein the anode layer is formed by spirally winding a copper wire coated with a negative electrode active material so as to extend in the lengthwise direction of the cable.

4. The cable-type secondary battery combined with a signal wire of claim 2, wherein the cathode layer is formed by spirally winding a conductor strip coated with a positive electrode active material so as to extend in the lengthwise direction of the cable.

5. The cable-type secondary battery combined with a signal wire of any one of claims 1 through 4, wherein the cable-type secondary battery is a lithium secondary battery.

## Patentansprüche

1. Mit einem Signaldraht kombinierte kabelartige Sekundärbatterie, umfassend:
eine kabelartige Sekundärbatterie, welche sich in einer Längsrichtung erstreckt und eine hohle Innenstruktur aufweist;
eine Signaldrahteinheit (110), welche in die kabelartige Sekundärbatterie (100) eingefügt ist und sich in der Längsrichtung eines Kabels erstreckt; und
eine Kabelummantelung (104), welche ein Äußeres der kabelartigen Sekundärbatterie abdeckt,
**dadurch gekennzeichnet, dass** die Signaldrahteinheit (110) aus einem optischen Kabel gebildet ist, welches derart gedreht ist, dass es eine Doppelspiralstruktur bildet, und
das optische Kabel ein fest gepuffertes optisches Kabel, ein optisches Kabel vom Loose-Tube-Typ oder ein optisches Kabel vom Slot-Typ ist.

2. Mit einem Signaldraht kombinierte kabelartige Sekundärbatterie nach Anspruch 1, wobei die kabelartige Sekundärbatterie umfasst:
eine hohle Anodenschicht;
einen Separator, welcher die Anodenschicht umgibt; und
eine Kathodenschicht, welche den Separator umgibt.

3. Mit einem Signaldraht kombinierte kabelartige Sekundärbatterie nach Anspruch 2, wobei die Anodenschicht gebildet wird, indem ein mit einem aktiven Material einer negativen Elektrode beschichteter Kupferdraht derart spiralförmig gewickelt wird, dass er sich in der Längsrichtung des Kabels erstreckt.

4. Mit einem Signaldraht kombinierte kabelartige Sekundärbatterie nach Anspruch 2, wobei die Kathodenschicht gebildet wird, indem ein mit einem aktiven Material einer positiven Elektrode beschichteter Leiterstreifen derart spiralförmig gewickelt wird, dass er sich in der Längsrichtung des Kabels erstreckt.

5. Mit einem Signaldraht kombinierte kabelartige Sekundärbatterie nach einem der Ansprüche 1 bis 4, wobei die kabelartige Sekundärbatterie eine Lithium-Sekundärbatterie ist.

## Revendications

1. Batterie secondaire de type à câble combinée à un fil de transmission de signaux, comprenant :
une batterie secondaire de type à câble s'étendant dans un sens de la longueur et ayant une structure intérieure creuse ;
une unité de fil de transmission de signaux (110) insérée dans la batterie secondaire de type à câble (100) et s'étendant dans le sens de la longueur d'un câble ; et
une gaine de câble (104) couvrant un extérieur de la batterie secondaire de type à câble,
**caractérisée en ce que** l'unité de fil de transmission de signaux (110) est composée d'un câble optique toronné pour former une structure à double spirale, et
le câble optique est un câble optique à gainage serré, un câble optique de type à tube à gainage flottant, ou un câble optique de type à fente.

2. Batterie secondaire de type à câble combinée à un fil de transmission de signaux selon la revendication 1, dans laquelle la batterie secondaire de type à câble comprend :
une couche d'anode creuse ;
un séparateur entourant la couche d'anode ; et
une couche de cathode entourant le séparateur.

3. Batterie secondaire de type à câble combinée à un fil de transmission de signaux selon la revendication 2, dans laquelle la couche d'anode est formée en enroulant en spirale un fil en cuivre revêtu d'un matériau actif d'électrode négative de façon à ce qu'elle s'étende dans le sens de la longueur du câble.

4. Batterie secondaire de type à câble combinée à un fil de transmission de signaux selon la revendication 2, dans laquelle la couche de cathode est formée en enroulant en spirale une bande conductrice revêtue d'un matériau actif d'électrode positive de façon à ce qu'elle s'étende dans le sens de la longueur du câble.

5. Batterie secondaire de type à câble combinée à un fil de transmission de signaux selon l'une quelconque des revendications 1 à 4, dans laquelle la batterie secondaire de type à câble est une batterie secondaire au lithium.
